(19) Europäisches Patentamt
European Patent Office
Office européen des brevets

(11) **EP 3 076 669 A1**

(12) **EUROPEAN PATENT APPLICATION**

(43) Date of publication:
**05.10.2016 Bulletin 2016/40**

(51) Int Cl.:
*H04N 19/186* *(2014.01)*  *H04N 19/30* *(2014.01)*
*H04N 19/86* *(2014.01)*  *H04N 19/36* *(2014.01)*

(21) Application number: **15305507.4**

(22) Date of filing: **03.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **Bordes, Philippe**
  **35576 Cesson-Sévigné (FR)**
• **Hiron, Franck**
  **35576 Cesson-Sévigné (FR)**
• **Cai, Kangying**
  **35576 Cesson-Sévigné (FR)**

(74) Representative: **Huchet, Anne
Technicolor
European Patent Operations
1-5, Rue Jeanne d'Arc
92443 Issy-les-Moulineaux cedex (FR)**

(54) **METHOD AND APPARATUS FOR GENERATING COLOR MAPPING PARAMETERS FOR VIDEO ENCODING**

(57) In scalable video coding, Enhancement Layer (EL) pictures are usually predicted from decoded Base Layer (BL) pictures. When the EL pictures and the BL pictures are represented with different color spaces, transforming the decoded BL pictures, for example, to the color space of the EL may improve the prediction. To accurately predict from the BL, the color space of the BL pictures can be partitioned into multiple octants, wherein each octant is associated with a respective set of color mapping function (CMF) parameters. In one embodiment, we propose to estimate the CMF parameters for one particular octant based on not only samples from the particular octant but also samples from neighboring octants in order to reduce color discontinuity artifacts.

FIG. 4

**Description**

<u>TECHNICAL FIELD</u>

This invention relates to a method and an apparatus for generating color mapping parameters for video encoding, and more particularly, to a method and an apparatus for generating the color mapping parameters for inter-layer prediction in scalable video encoding.

<u>BACKGROUND</u>

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A sample in a picture may be transformed from one color space to another color space, or more generally, from one color to another color. For example, in scalable video coding, Enhancement Layer (EL) pictures are usually predicted from (possibly upsampled) decoded Base Layer (BL) pictures. When the EL pictures and the BL pictures are represented with different color spaces and/or have been color graded differently, or have different luminance ranges (such as Standard Dynamic Range for the BL and High Dynamic Range for the EL) transforming the decoded BL pictures, for example, to the color space or the dynamic range of the EL may improve the prediction.

This color transform is also known as color mapping, which may be represented by a Color Mapping Function (CMF). The CMF can for example be approximated by a 3x3 gain matrix plus an offset (Gain-Offset model), which are defined by 12 parameters. When only one set of Gain-Offset model parameters is used to map the entire color space of the BL pictures, such an approximation of the CMF may not be very precise because it assumes a linear transform model. To improve the precision of color mapping, the color space of the BL pictures can be partitioned into multiple octants, wherein each octant is associated with a respective color mapping function.

In another example, a 3D Look Up Table (also known as 3D LUT), which indicates how a color (usually with three components) is mapped to another color in a look-up table, can be used to describe a CMF. The 3D LUT can be much more precise because its size can be increased depending on the required accuracy. However, a 3D LUT may thus represent a huge data set.

In another example, the color transform can be performed by applying a one-dimensional color LUT independently on each color component of a picture or of a region in the picture. Since applying ID LUT independently on each color component breaks component correlation, which may decrease the efficiency of the inter-layer prediction and thus the coding efficiency, a linear model such as a 3x3 matrix (in the case of 3 color components) and optionally a vector of offsets can be applied to the mapped components so as to compensate for the decorrelation between the components. Optionally, an additional transform can be performed by applying another one-dimensional color LUT independently on each color component of a picture or of a region in the picture.

<u>SUMMARY</u>

According to an aspect of the present principles, a method for video encoding is presented, comprising: accessing a first set of samples and a second set of samples of a base layer picture, which respectively belong to a first octant and a second octant in a color space for the base layer picture; generating color mapping parameters for the first octant responsive to the first and second sets of samples; transforming a block of samples of the base layer picture to form a prediction block of a corresponding block in an enhancement layer (EL) picture, the block of samples of the base layer picture including at least one sample which belongs to the first octant, wherein the at least one sample which belongs to the first octant is transformed based on the generated color mapping parameters; encoding the corresponding block in the enhancement layer picture using the formed prediction block; and generating a bitstream responsive to the encoding. The present embodiment also provide an apparatus for performing these steps.

The present embodiment also provide a computer readable storage medium having stored thereon instructions for video encoding according to the methods described above.

The present embodiment also provide a computer readable storage medium having stored thereon a bitstream generated according to the methods described above.

<u>BRIEF DESCRIPTION OF THE DRAWINGS</u>

FIG. 1 shows the architecture of an exemplary SHVC encoder.

FIG. 2 shows an exemplary partitioning of a color space.

FIG. 3 shows a corresponding sample in the enhancement layer for a sample in the base layer.

FIG. 4 is a flowchart depicting an exemplary method for scalable video encoding with CGS (Color Gamut Scalability) prediction, according to an embodiment the present principles.

FIG. 5A is a pictorial example depicting a color discontinuity artifact, FIG. 5B includes arrows pointing to the location of the artifact, FIG. 5C shows the same portion of the picture without CGS, and FIG. 5D shows the same portion of the picture encoded with our proposed techniques.

FIG. 6A is a pictorial example illustrating that samples in both the current octant and in the octants surrounding the current octant are used to estimate the color mapping function parameters, and FIG. 6B is a pictorial example depicting asymmetrical overlapping, according to an embodiment the present principles.

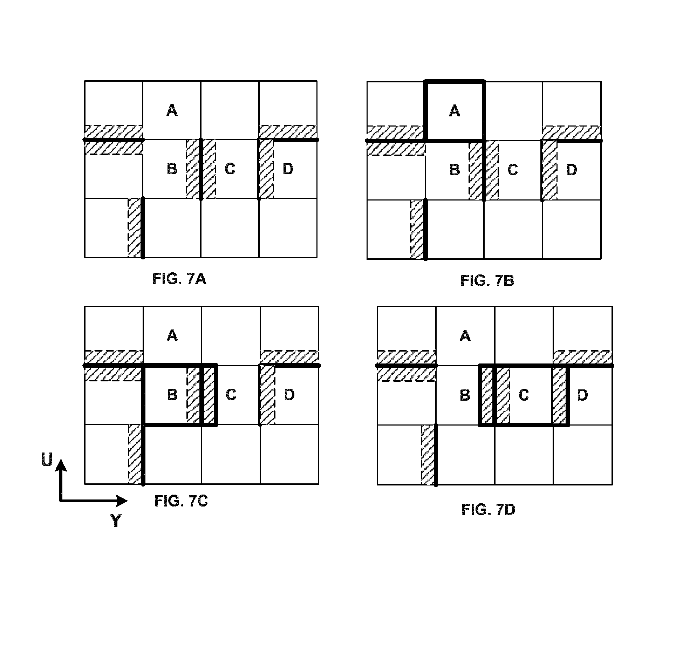

FIG. 7A is a pictorial example illustrating several octants and possible overlapping areas, FIG. 7B is a pictorial example illustrating that only samples from octant A itself are used to estimate the CMF parameters for octant A, FIG. 7C is a pictorial example illustrating that samples from both octant B and neighboring octant C are used to estimate the CMF parameters for octant B, and FIG. 7D is a pictorial example illustrating that samples from both octant C and neighboring octants B and D are used to estimate the CMF parameters for octant C, according to an embodiment the present principles.

FIG. 8 is a flowchart depicting an exemplary method for selectively choosing the overlapping area and estimating the CMF parameters for an octant, according to an embodiment of the present principles.

FIG. 9A is a pictorial example depicting an octant with two boundaries for possible overlapping, FIG. 9B is a pictorial example illustrating that the CMF parameters for octant B are estimated by samples from octant B itself, FIG. 9C is a pictorial example illustrating that the CMF parameters for octant B are estimated by samples from octants A, B and C, and FIG. 9D is a pictorial example illustrating that overlapping is selected for the left boundary, but not for the right boundary, according to an embodiment of the present principles.

FIG. 10 is a pictorial example illustrating a boundary area of an octant.

FIG. 11 is a flowchart depicting another exemplary method for selectively choosing the overlapping area and estimating the CMF parameters for an octant, according to an embodiment of the present principles.

FIG. 12 illustrates a flowchart depicting an exemplary method for selectively choosing the overlapping area based on the discontinuity test conditions and estimating the CMF parameters for an octant, according to an embodiment of the present principles.

FIG. 13 illustrates a block diagram depicting an exemplary system in which various aspects of the exemplary embodiments of the present principles may be implemented.

FIG. 14 illustrates a block diagram depicting an example of a video processing system that may be used with one or more implementations.

FIG. 15 illustrates a block diagram depicting another example of a video processing system that may be used with one or more implementations.

## DETAILED DESCRIPTION

In scalable video coding, for example, as defined in the scalable extension of HEVC (also referred to as SHVC, as described in a document entitled "High Efficiency Video Coding, Recommendation ITU-T H.265," published by ITU-T in October 2014), video signals represented in different layers can have different parameters, such as, but not limited to, spatial resolutions, sample bit depths, and color gamuts. Depending on which parameters differ between the BL and EL, appropriate forms of inter-layer processing are applied to the BL reconstructed pictures to derive the inter-layer reference (ILR) pictures for efficient EL coding.

In the following, we use a two-layer SHVC encoder to illustrate various embodiments according to the present principles. It should be noted that the present principles can be applied to any scalable video encoders with one or more enhancement layers. In the present application, we use the terms "picture" and "image" interchangeably.

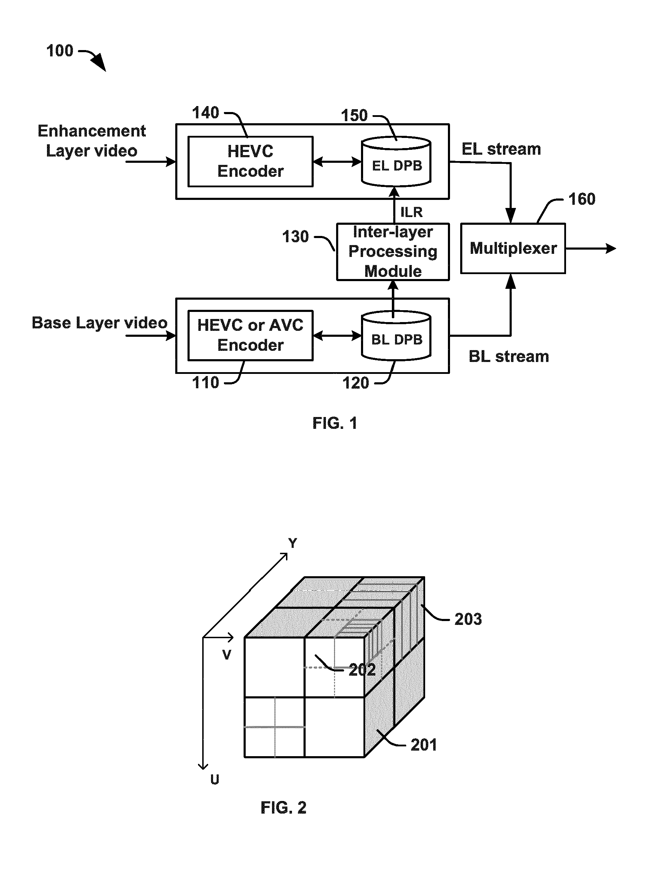

FIG. 1 shows the architecture of an exemplary SHVC encoder. The base layer video is encoded, for example, using an HEVC or AVC encoder (110). The reconstructed BL picture is stored in the BL Decoded Picture Buffer (BL DPB, 120). When necessary, appropriate inter-layer processing is applied to the reconstructed BL picture to obtain an inter-layer reference picture, using an inter-layer processing module 130. The ILR picture is then placed in the EL Decoded Picture Buffer (EL DPB, 150) as a reference picture. The enhancement layer video is encoded, for example, using an HEVC encoder (140), based on the EL temporal reference pictures and the ILR pictures. The bitstream from the Base Layer and the Enhancement Layer, namely, the BL stream and the EL stream, can then be multiplexed into one bitstream using a multiplexer (160).

When the color spaces and/or the color gamuts of the BL and of the EL are different, one can use a color mapping function to transform the samples of the BL when performing the inter-layer prediction of the EL samples from BL samples. In the following, the color mapping is also called CGS (Color Gamut Scalability) prediction as it supports color gamut scalability. In the present application, we use the YUV color space to illustrate different embodiments. The present principles can also be applied to other color spaces, for example, but not limited to, the RGB color space and XYZ color space.

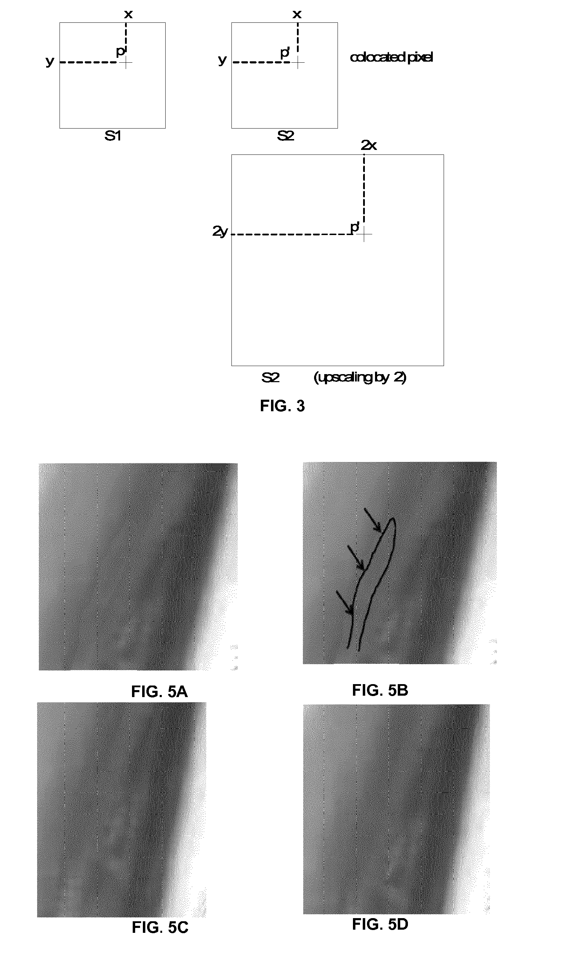

As described before, to improve the precision of color mapping, the color space of the BL pictures can be partitioned into multiple octants, wherein each octant is associated with a respective Gain-Offset model. FIG. 2 shows an exemplary partitioning of a color space, wherein the base layer color space is partitioned into 3D regions (also referred to as octants). FIG. 2 shows that an octant according to this application may be a cube (201, 202) or a slab (203). The term octant is used in this application to refer to a portion of the 3D color space, wherein in the exemplary embodiments the octant may be a 3D space bounded by six mutually perpendicular planes. However, it is to be understood that the term may also refer to other divisions of the 3D color space into units that may be processed in the manner described below. As shown in FIG. 2, an octant may have different lengths along the Y-, U-, and V-directions, and one octant may have a different size and/or shape from another octant. Each octant is associated with twelve parameters of the Gain-Offset model, which enables the CGS prediction of the EL samples from the corresponding BL samples. FIG. 3 illustrates that when BL picture S1 and EL picture S2 have the same spatial resolution (for example, when SNR scalability is used), EL sample p' is predicted from co-located BL sample p, or EL sample p' is predicted from re-sampled BL sample p when BL picture S1 and EL picture S2 have different spatial resolutions (for example, when spatial scalability is used) or when color re-phasing filter is used.

Mathematically, the CGS prediction of EL sample ($y'$, $u'$, $v'$) from the corresponding BL sample ($y$, $u$, $v$) using the Gain-Offset model can be described as:

$$\begin{pmatrix} y' \\ u' \\ v' \end{pmatrix} = M_i \begin{pmatrix} y \\ u \\ v \end{pmatrix} + O_i = \begin{pmatrix} a_{0,i} & b_{0,i} & c_{0,i} \\ a_{1,i} & b_{1,i} & c_{1,i} \\ a_{2,i} & b_{2,i} & c_{2,i} \end{pmatrix} \begin{pmatrix} y \\ u \\ v \end{pmatrix} + \begin{pmatrix} o_{0,i} \\ o_{1,i} \\ o_{2,i} \end{pmatrix} \qquad (1)$$

where $M_i = \begin{pmatrix} a_{0,i} & b_{0,i} & c_{0,i} \\ a_{1,i} & b_{1,i} & c_{1,i} \\ a_{2,i} & b_{2,i} & c_{2,i} \end{pmatrix}$ is the gain matrix and $O_i = \begin{pmatrix} o_{0,i} \\ o_{1,i} \\ o_{2,i} \end{pmatrix}$ is the offset vector for octant $i$.

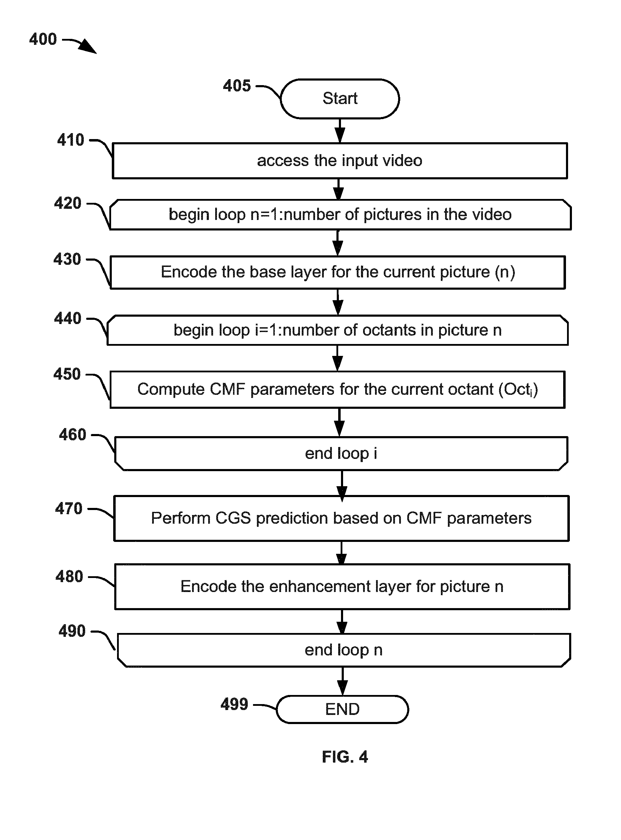

FIG. 4 illustrates an exemplary method 400 for scalable video encoding with CGS prediction according to the present principles. Method 400 starts at step 405. At step 410, an encoder accesses a video, which is then separated into a base layer input video and an enhancement layer video, as input, or the encoder accesses a base layer input video and an enhancement layer video as input. At step 420, the encoder begins to loop over individual pictures in the input video. At step 430, the encoder encodes the base layer for the current picture (picture n), for example, using an AVC or HEVC video encoder. The encoder may partition the BL color space into multiple octants, for example, using a pre-determined pattern. The encoder can also vary the partitioning from picture to picture.

At step 440, the encoder begins to loop over individual octants in the current picture. At step 450, the encoder computes the CMF parameters, for example, twelve parameters of a Gain-Offset model, for the current octant ($Oct_i$). The loop over individual octants ends at step 460. At step 470, the encoder performs CGS prediction to obtain the EL prediction from the BL samples based on the CMF parameters. The CGS prediction may be performed, for example, on a block basis or on a picture basis. When it is performed on a block basis, for each sample in a block, the encoder determines an octant which the sample belongs to. Subsequently, using the color mapping parameters for the octant, the encoder can transform the sample into the EL prediction using the CMF. The encoder may also perform other operations, for example, but not limited to, spatial upsampling, bit depth upsampling to obtain the EL prediction. Based on the CGS prediction and/or other type of inter-layer prediction, the encoder encodes the enhancement layer for the current picture at step 480. The loop over individual pictures ends at step 490. Method 400 ends at step 499.

For the decoder to properly decode the bitstream, the CMF parameters are also encoded in the bitstream. For example, the CMF parameters can be encoded using syntax structures colour_mapping_table () and colour_mapping_octants (), in PPS (Picture Parameter Set), as described in Sections F.7.3.2.3.4 and F.7.3.2.3.5 of the SHVC Specification.

In the current implementation of the SHVC reference software, the color mapping function parameters are estimated using an error minimization method (such as Least Square Minimization, LSM):

$$\arg\min_{(M_i,O_i)} Err_X(M_i, O_i) \qquad (2)$$

where $Err_X(M_i,O_i) = \sum_{(y,u,v)\in Oct_i}(X - M_i.(y, u, v)^T - O_i)^2$, X corresponds to the set of samples in the EL to be predicted, $(M_i, O_i)$ are the matrix and offset as described in Eq. (1), and $Oct_i$ is the current octant under consideration. That is, only samples from the current $Oct_i$ itself are used to derive the CMF parameters for $Oct_i$. After the CMF parameters $M_i$ and $O_i$ are estimated, the CGS prediction corresponding to the current octant can be obtained as described in Eq. (1).

The computation of the minimization problem (2) is performed separately for each octant, using the samples $(y, u, v)$ belonging to the current octant (i.e., $(y, u, v) \in Oct_i$). Because different octants use different sets of samples to estimate the color mapping function parameters, two samples that are close in the BL color space, but fall into two different octants, may be transformed into two samples that show color discontinuity in the EL prediction frame.

For example, a BL picture includes a red area with smooth gradients. After the partitioning of the color space, the colors corresponding to a first subset of the red area fall in one octant, and the colors corresponding to the rest of the red area fall into other octants. After color mapping (CGS prediction for EL), the color range corresponding to the first subset becomes more saturated than the color corresponding to the rest of the red color set. This generates artificial edge (artifact) in the area that was originally smooth in EL.

FIG. 5A shows an exemplary artifact with color discontinuity, and we use arrows to point to the artificial edge in FIG. 5B. In this example, the samples within the area pointed to by the arrows fall into one octant and other samples fall into other octants in the color space. As can be seen from FIG. 5A, an octant in the color space may correspond to an irregular area in the picture. More generally, an octant in the color space may correspond to any shape of area of samples in the picture. After color mapping, the colors in the EL prediction are not as close as they should be in the EL picture, and sometimes cause color discontinuity artifacts, which are not present without CGS as shown in FIG. 5C. At a low bit rate, the residuals are often coarsely quantized and may not compensate the artifacts in the EL prediction entirely. Thus, the reconstructed EL picture may exhibit similar artifact as in the EL prediction.

The present principles are directed to a method and an apparatus for improving the parameter estimation of the color mapping function. In one embodiment, the color mapping function parameters are estimated using not only samples from the current octant but also samples from neighboring octants. Advantageously, the color mapping function parameters are no longer estimated independently for each octant, and the proposed techniques may reduce color discontinuity artifacts at the octant boundaries. Thus, the proposed techniques may improve the subjective quality of the reconstructed enhancement layer video.

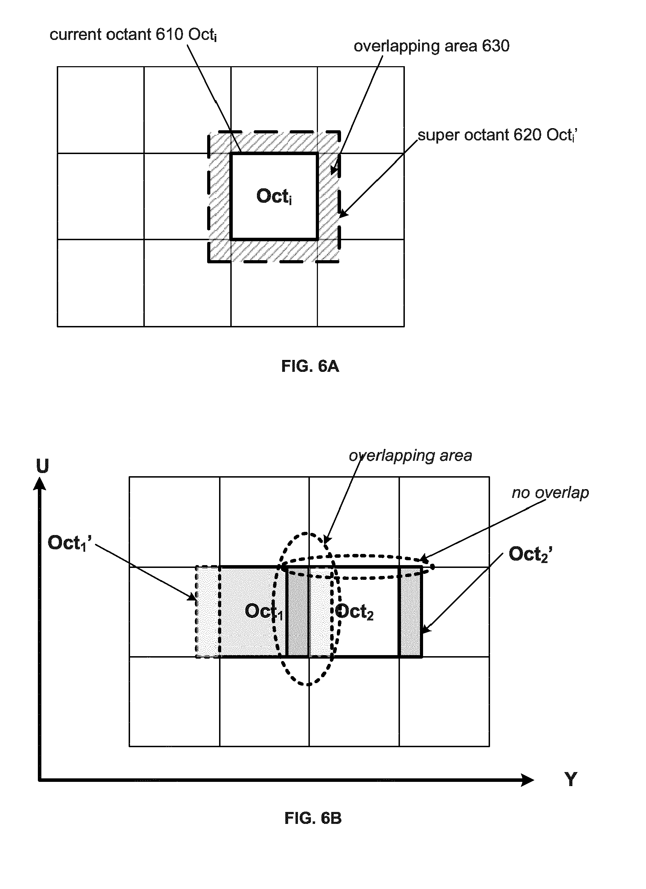

In one embodiment, we propose to compute the color mapping function parameters by including samples from neighboring octants. FIG. 6A shows one example using a 2D representation, where samples in the current octant (within the bold line 610) and some samples from the octants surrounding the current octant $Oct_i$ are used to estimate the color mapping function parameters. For ease of notation, we denote the region (within the dashed line 620) including the samples of the current octant and the neighboring samples as super octant $Oct_i'$, and denote the samples from the neighboring octants that are used for parameter estimation (shaded area 630, $Oct_i' \backslash Oct_i$) as an overlapping area. A neighboring octant may refer to an immediately adjacent octant, or may refer to an octant within a distance as set by the encoder. It should be noted that the size and shape of overlapping area can be different from the example shown in FIG. 6A. For example, the overlapping area can be an area along one of the octant boundaries, or a combination of two or more areas along the boundaries, or the overlapping area can be elliptical or in other shapes.

Subsequently, the minimization problem can be formulated as:

$$\arg\min_{(M_i,O_i)} Err_X(M_i, O_i) \qquad (3)$$

where $Err_X(M_i, O_i) = \sum_{(y,u,v) \in Oct_i'}(X - M_i.(y,u,v)^T - O_i)^2$, and X corresponds to the set of samples in the EL to be predicted. Compared to the minimization problem of (2), neighboring samples are considered in the computation of (3) in addition to the samples of $Oct_i$. After the parameters are estimated, the prediction is performed as described in Eq. (1).

In the following, we describe the methods of selecting the super octant $Oct_i$ in further detail.

Asymmetrical Overlapping

In one embodiment, we may choose to use the overlapping area from one or two directions of the color space, but not all the directions. For example, we observe that in some cases the color discontinuity occurs most frequently along the Y-direction, thus we may only consider overlapping in the Y-direction. FIG. 6B illustrates the color space in a 2D representation, considering the Y and U color components. Using two octants $Oct_1$ and $Oct_2$ as examples, we illustrate that super octants $Oct_1'$ and $Oct_2'$ include overlapping areas that are only in the Y direction. In other examples, we may only consider overlapping in other directions, for example, in the U-direction or V-direction, or a combination of two directions.

While using a super octant to estimate the CMF parameters for an octant can reduce the color discontinuity artifact, it may also sacrifice compression efficiency. Thus, by only overlapping in certain direction(s), we provide a good tradeoff between artifact reduction and compression efficiency.

Selective Overlapping

We may also selectively choose the overlapping area for each octant separately. For example, in FIG. 7A, the octant boundaries where overlapping is enabled at the CMF parameters estimation stage are highlighted in bold, and the corresponding overlapping areas are shaded. In particular, FIG. 7B shows that only samples from octant A itself are used to estimate the CMF parameters for octant A, FIG. 7C shows that samples from octant B and neighboring octant C are used to estimate the CMF parameters for octant B, and FIG. 7D shows that samples from octant C and neighboring octants B and D are used to estimate the CMF parameters for octant C. More generally, for each octant we may choose whether or not to use an overlapping area to estimate the CMF parameters, and may select which overlapping area is used for estimation if an overlapping area is used.

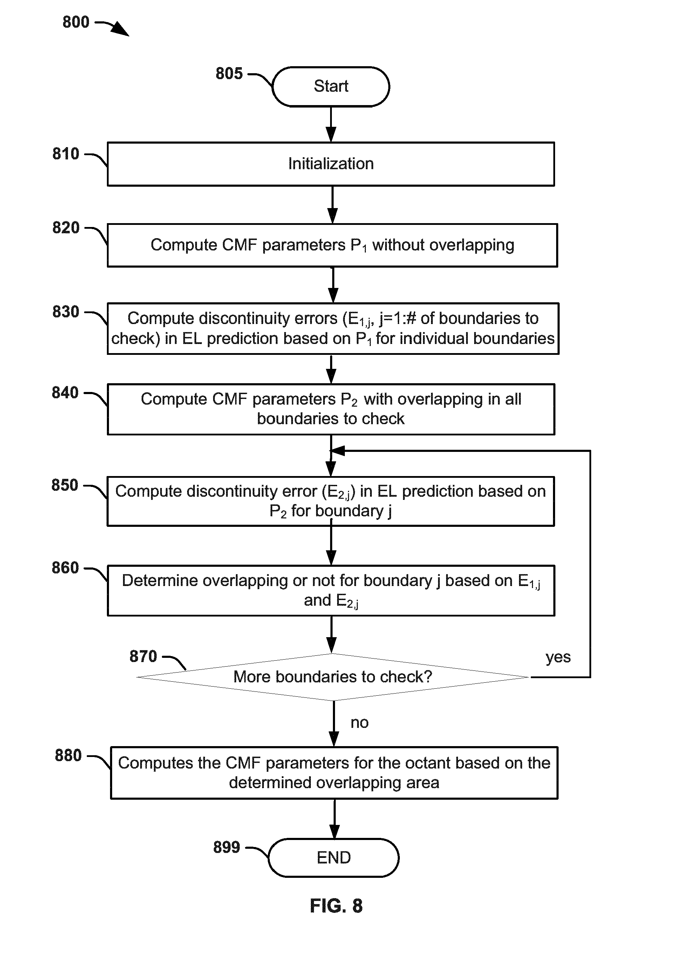

FIG. 8 illustrates an exemplary method 800 for selectively choosing the overlapping area and estimating the CMF parameters for an octant according to the present principles, which can be used to implement step 450 in method 400. Method 800 starts at step 805. At the initialization step 810, the encoder may choose a set of boundaries that may be checked for selectively choosing the overlapping area, for example, the encoder may choose to check only boundaries in the Y-direction. At step 820, the encoder may compute the CMF parameters ($P_1$) using the samples from the octant itself (i.e., without overlapping). At step 830, the encoder computes discontinuity errors ($E_{1,j}$, j=1, ..., the number of boundaries to check) in the EL prediction based on $P_1$ for the boundaries.

The encoder estimates at step 840 the CMF parameters ($P_2$) with overlapping in all boundaries that need to be checked, and computes at step 850 the discontinuity error ($E_{2,j}$) in EL prediction based on $P_2$ for boundary j. In one example, the overlapping area for one boundary is 1/8 of the size of the octant. Using the discontinuity errors based on $P_1$ and $P_2$ (i.e., the CMF parameters calculated without or with an overlapping area for boundary j respectively), the encoder determines at step 860 whether an overlapping area is used or not for boundary j. In particular, when $E_{1,j} < E_{2,j}$, there is less artifact without using the overlapping area and the encoder would choose not using an overlapping area for boundary j. Otherwise, if $E_{1,j} \geq E_{2,j}$, the encoder would choose using an overlapping area for boundary j. At step 870, the encoder checks whether there are more boundaries to be checked. If yes, the control is returned to step 850. At step 880, based on the determined overlapping area, the encoder may re-compute the CMF parameters for the octants. Method 800 ends at step 899.

The steps in method 800 may proceed at a different order from what is shown in FIG. 8, for example, step 860 may be performed after step 870, that is, the encoder determines the overlapping area after all boundaries are checked. In some conditions, step 880 can be skipped, for example, when the encoder determines that no overlapping area is selected, the CMF parameters $P_1$ computed at step 820 can be used as the final CMF parameters for the octant without re-computation.

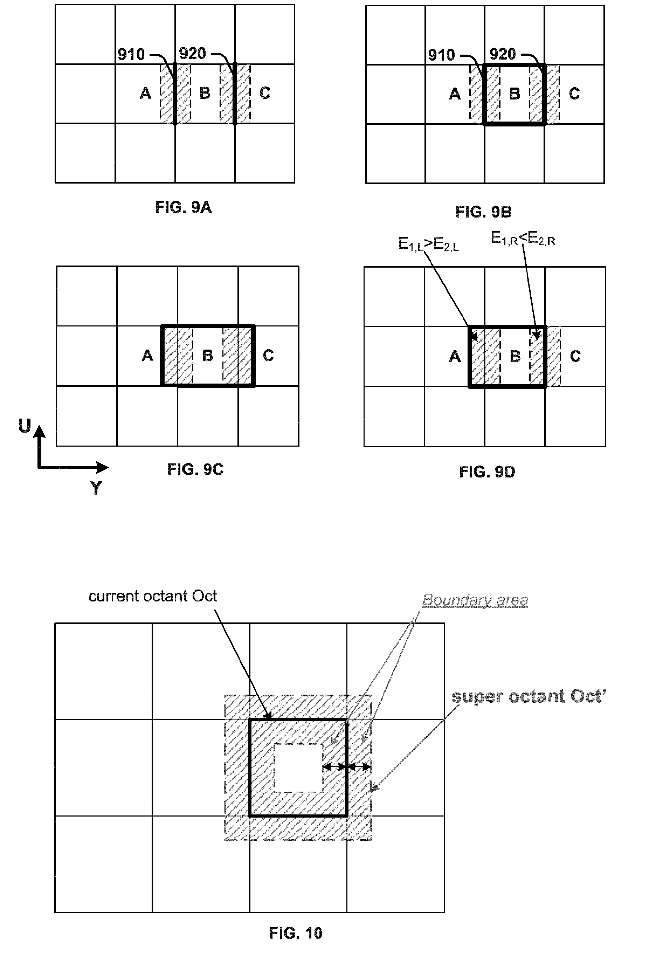

An example is depicted in FIG. 9A for an octant B with two vertical boundaries: left boundary 910 and right boundary 920. First, the CMF parameters are computed based on the samples from octant B itself (no overlapping, as shown in FIG. 9B) and errors $E_{1,L}$ and $E_{1,R}$ are estimated for left and right boundaries in the EL prediction respectively. Then, the CMF parameters are computed on the super octant (with overlapping for both vertical boundaries, as shown in FIG. 9C) and errors $E_{2,L}$ and $E_{2,R}$ in the EL prediction are estimated. In this example, $E_{1,L} > E_{2,L}$ and $E_{1,R} < E_{2,R}$. Then we choose to use an overlapping area for the left boundary, but not for the right boundary, as shown in FIG. 9D.

In another embodiment, we choose the overlapping area based on the observation that the color discontinuity artifacts often occur at the pixels which are close to each other in the image and with colors falling into different sides of an octant boundary. In other words, the artifacts often happen among those pixels that are close to each other in both image and color spaces. Thus, we would choose to use an overlapping area for one octant boundary if pixels along the octant boundary are adjacent to each other in the image space, but fall into different sides of the octant boundary. In FIG. 10, we denote the area that is adjacent to the octant boundary as the boundary area. Note that the boundary area includes both samples from the current octant and one or more neighboring octants.

Table 1 provides exemplary pseudo-code for one implementation.

Table 1

```
foreach sample S_i in the image
{
  Determine the octant Oct_K in color space that S_i falls into
  if (S_i falls into the boundary area of Oct_K)
  {
    foreach spatially neighboring pixel S_j (Dis_{ij}(S_i,S_j) ≤ a_{ImgDis})
    {
      Determine the octant Oct_L in color space S_j falls into.
      if (Oct_K ≠ Oct_L, Oct_K and Oct_L share boundary face/edge/points,
and  S_j falls into the boundary area of Oct_K)
      {
        // B_{KL} is the boundary face/edge/points between Oct_K and Oct_L
        // E_{ij} is the discontinuity error of S_i and S_j
        // calculate the sum of error between Oct_K and Oct_L
        sum_E(B_{KL}) += E_{ij};
        // calculate the number of pixels
        N(B_{KL})++;
      }
    }
  }
}

avgE(B_{KL}) = sum_E(B_{KL}) / N(B_{KL})
//determine whether to use overlapping or not
if (avgE(B_{KL}) ≥ a_{DisColor})
      Will use the overlapping area for the boundary of Oct_K and Oct_L;
```

For sample $S_i$, we denote its location as $X_i$ and its color values as $C_i = (y_i, u_i, v_i)$. The distance between samples $S_i$ and $S_j$ (i.e., the distance between locations $X_i$ and $X_j$, denoted as $Dis_{ij}(S_i,S_j)$) can be used to determine spatially neighboring pixels, for example, sample $S_j$ is considered to be a spatially neighboring sample of $S_i$ if $Dis_{ij}(S_i,S_j) \le a_{ImgDis}$. In one example, threshold $a_{ImgDis}$ can be set to 1.

We denote the CMF parameters estimated on octant $Oct_K$ itself (no overlapping) as $P_1(Oct_K)$, and the color sample value obtained with the CGS prediction for sample $S_i$ as $C_i' = (y_i', u_i', v_i')$. Similarly, we denote the CMF parameters estimated on octant $Oct_L$ itself (no overlapping) as $P_1(Oct_L)$, and the color sample value obtained with the CGS prediction for pixel $S_j$ as $C_j' = (y_j', u_j', v_j')$. In one example, the discontinuity error for component Y can be calculated as

$$E_{ij} = |y_i' - y_j'|. \qquad (4)$$

In Table 1, the average discontinuity error avgE($B_{KL}$) is used to determine whether an overlapping area is used for the boundary of $Oct_K$ and $Oct_L$. In other embodiments, the number of spatially neighboring samples that fall into two neighboring octants in the color space, N($B_{KL}$), can be used to determine whether an overlapping area is used for the boundary of $Oct_K$ and $Oct_L$. For example, we may check whether N($B_{KL}$) $\geq n_{DisColor}$, i.e.,

$$if \ \ N(B_{KL}) \geq n_{DisColor} \qquad\qquad (5)$$

in place of checking

$$if \ (avgE(B_{KL}) \geq a_{DisColor}) \qquad\qquad (6)$$

as described in Table 1. An exemplary value of the threshold $n_{DisColor}$ can be set to 1% of the overall number of samples in the image. Alternatively, we can check

$$if \ (avgE(B_{KL}) \geq a_{DisColor} \ \ || \ \ N(B_{KL}) \geq n_{DisColor}) \ or \qquad\qquad (7)$$

$$if \ (avgE(B_{KL}) \geq a_{DisColor} \ \ \&\& \ \ N(B_{KL}) \geq n_{DisColor}) \qquad\qquad (8)$$

to determine whether or not an overlapping area is to be used for the boundary of $Oct_K$ and $Oct_L$.

After the overlapping areas are determined for different octant boundaries, that is, after the super octant is determined, the CMF parameters can be estimated accordingly based on the super octant.

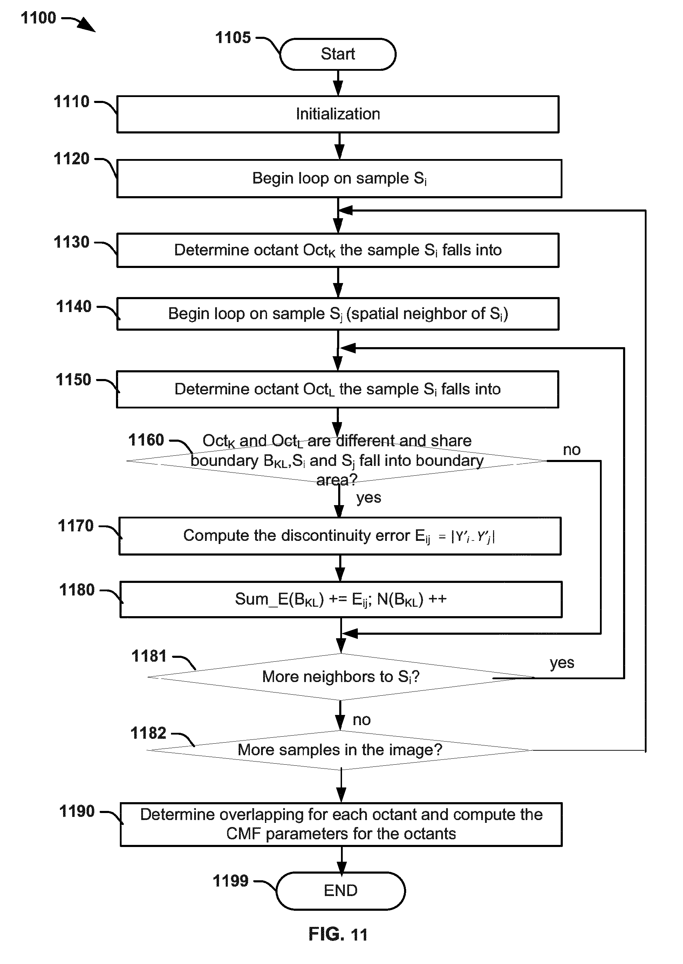

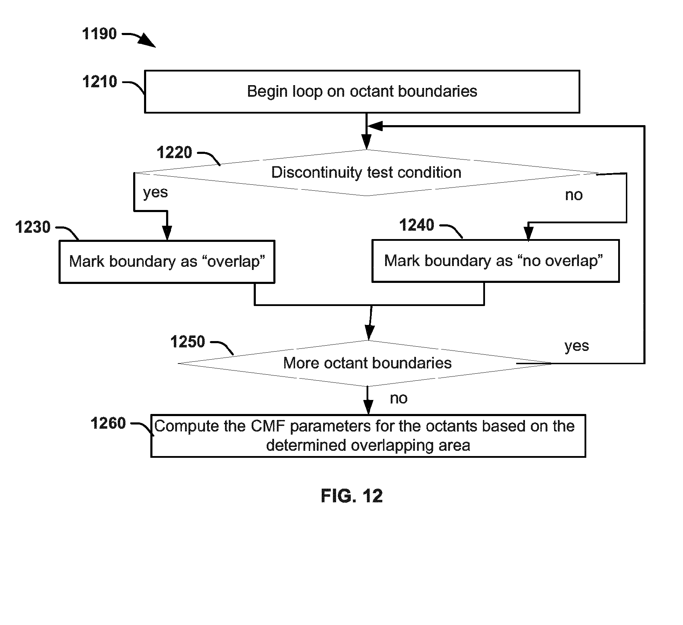

FIG. 11 illustrates another exemplary method 1100 for selectively choosing the overlapping area and estimating the CMF parameters for an octant according to the present principles, which can also be used to implement step 450 in method 400. At step 1110, the encoder performs initialization, for example, setting different thresholds that may be used and setting the counter N($B_{KL}$) to zero. At step 1120, the encoders starts to loop over individual samples in the picture. At step 1130, the encoder determines an octant ($Oct_K$) that the current sample $S_i$ falls into. At step 1140, the encoder starts to loop over spatially neighboring samples of $S_i$. At step 1150, the encoder determines an octant ($Oct_L$) that the current spatially neighboring sample $S_j$ falls into. At step 1160, the encoder determines whether samples $S_i$ and $S_j$ fall into different octants, whether octants $Oct_K$ and $Oct_L$ share an boundary, and whether $S_i$ and $S_j$ fall into the boundary area. If the condition is satisfied, the encoder computes the discontinuity error, for example as described in Eq. (4), and also increments the counter N($B_{KL}$). At step 1181, the encoder checks whether there are more spatially neighboring samples for the current sample. If yes, the control returns to step 1150. At step 1182, the encoder checks whether there are more samples to be checked in the image. If yes, the control returns to step 1130. At step 1190, the encoder determines the overlapping area for each octant based on the discontinuity test conditions obtained at step 1180 and computes the CMF parameters for the octant, for example, as illustrated in the following in FIG. 12.

FIG. 12 further illustrates an exemplary method 1190 for selectively choosing the overlapping area based on the discontinuity test conditions and estimating the CMF parameters for an octant according to the present principles. At step 1210, the encoder starts to loop over individual octant boundaries in the color space. At step 1220, the encoder checks the discontinuity test conditions, for example, as described in Eqs. (5)-(8). If the condition is satisfied for a current boundary, the encoder marks the current boundary as "overlap" at step 1230; otherwise, the encoder marks the current boundary as "no overlap" at step 1240. For example, assuming octant $Oct_K$ is the current octant being examined, if boundary $B_{KL}$ between octants $Oct_K$ and $Oct_L$ is marked as "overlap," then the super octant for $Oct_K$ will include an overlapping area from octant $Oct_L$ for boundary $B_{KL}$, that is, the super octant includes samples from both the current octant $Oct_K$ and samples from neighboring octant $Oct_L$. At step 1250, the encoder checks whether there are more octant boundaries to be checked. If yes, the control returns to step 1220. At step 1260, the encoder computes the CMF parameters for the octant based on the determined overlapping area.

The size of the overlapping area could be varied, for example, with the luma values of the two octants. In one embodiment, we can have a larger overlapping area between two octants when the octants have greater luma values. This is based on the observation that human eyes are usually more sensitive to the bright regions in the image. Another example is that the size of the overlapping could be varied with the perceptual importance of the corresponding image region.

In the above, we discussed using the Gain-Offset model. The present principles can also be applied when other models are used.

FIG. 5D shows the same portion of image as FIG. 5A, encoded with the proposed techniques. As shown in FIG. 5D, the color discontinuity artifacts no longer exist.

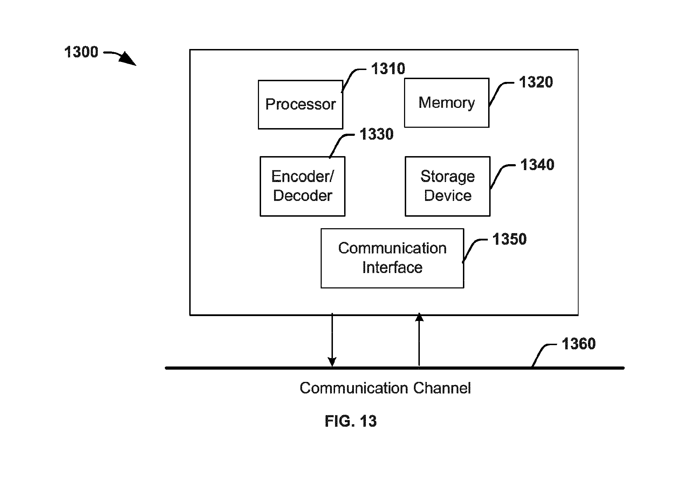

FIG. 13 illustrates a block diagram of an exemplary system in which various aspects of the exemplary embodiments of the present principles may be implemented. System 1300 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1300 may be communicatively coupled to other similar systems, and to a display via a communication channel as shown in FIG. 13 and as known by those skilled in the art to implement the exemplary video system described above.

The system 1300 may include at least one processor 1310 configured to execute instructions loaded therein for implementing the various processes as discussed above. Processor 1310 may include embedded memory, input output interface and various other circuitries as known in the art. The system 1300 may also include at least one memory 1320 (e.g., a volatile memory device, a non-volatile memory device). System 1300 may additionally include a storage device 1340, which may include non-volatile memory, including, but not limited to, EEPROM, ROM, PROM, RAM, DRAM, SRAM, flash, magnetic disk drive, and/or optical disk drive. The storage device 1340 may comprise an internal storage device, an attached storage device and/or a network accessible storage device, as non-limiting examples. System 1300 may also include an encoder/decoder module 1330 configured to process data to provide an encoded video or decoded video.

Encoder/decoder module 1330 represents the module(s) that may be included in a device to perform the encoding and/or decoding functions. As is known, a device may include one or both of the encoding and decoding modules. Additionally, encoder/decoder module 1330 may be implemented as a separate element of system 1300 or may be incorporated within processors 1310 as a combination of hardware and software as known to those skilled in the art.

Program code to be loaded onto processors 1310 to perform the various processes described hereinabove may be stored in storage device 1340 and subsequently loaded onto memory 1320 for execution by processors 1310. In accordance with the exemplary embodiments of the present principles, one or more of the processor(s) 1310, memory 1320, storage device 1340 and encoder/decoder module 1330 may store one or more of the various items during the performance of the processes discussed herein above, including, but not limited to the base layer input video, the enhancement layer input video, equations, formula, matrices, variables, operations, and operational logic.

The system 1300 may also include communication interface 1350 that enables communication with other devices via communication channel 1360. The communication interface 1350 may include, but is not limited to a transceiver configured to transmit and receive data from communication channel 1360. The communication interface may include, but is not limited to, a modem or network card and the communication channel may be implemented within a wired and/or wireless medium. The various components of system 1300 may be connected or communicatively coupled together using various suitable connections, including, but not limited to internal buses, wires, and printed circuit boards.

The exemplary embodiments according to the present principles may be carried out by computer software implemented by the processor 1310 or by hardware, or by a combination of hardware and software. As a non-limiting example, the exemplary embodiments according to the present principles may be implemented by one or more integrated circuits. The memory 1320 may be of any type appropriate to the technical environment and may be implemented using any appropriate data storage technology, such as optical memory devices, magnetic memory devices, semiconductor-based memory devices, fixed memory and removable memory, as non-limiting examples. The processor 1310 may be of any type appropriate to the technical environment, and may encompass one or more of microprocessors, general purpose computers, special purpose computers and processors based on a multi-core architecture, as non-limiting examples.

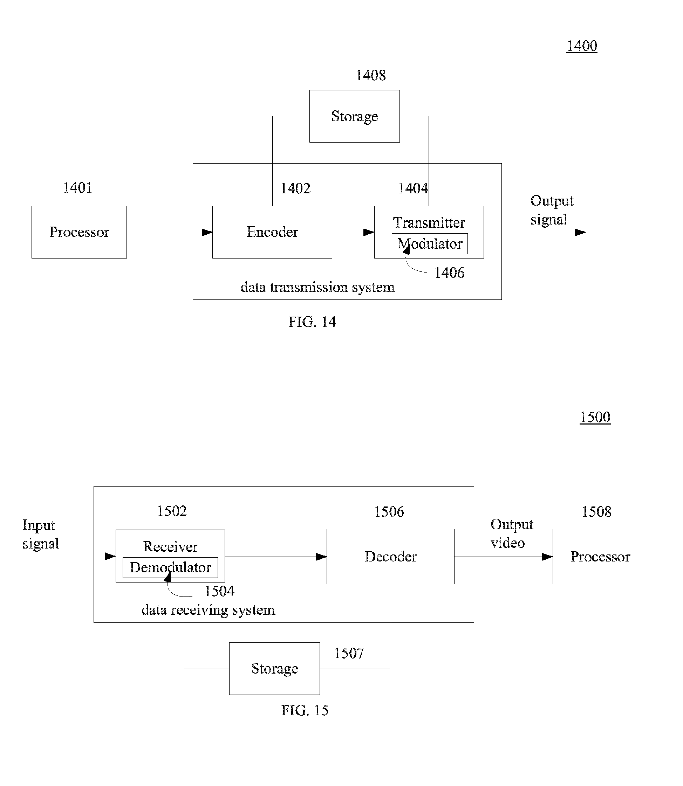

Referring to FIG. 14, a data transmission system 1400 is shown, to which the features and principles described above may be applied. The data transmission system 1400 may be, for example, a head-end or transmission system for transmitting a signal using any of a variety of media, such as, satellite, cable, telephone-line, or terrestrial broadcast. The data transmission system 1400 also may be used to provide a signal for storage. The transmission may be provided over the Internet or some other network. The data transmission system 1400 is capable of generating and delivering, for example, video content and other content.

The data transmission system 1400 receives processed data and other information from a processor 1401. In one implementation, the processor 1401 generates color mapping function parameters, for example, using method 400, 800, or 1100. The processor 1401 may also provide metadata to 1400 indicating, for example, the partitioning of the color space.

The data transmission system or apparatus 1400 includes an encoder 1402 and a transmitter 1404 capable of transmitting the encoded signal. The encoder 1402 receives data information from the processor 1401. The encoder 1402 generates an encoded signal(s).

The encoder 1402 may include sub-modules, including for example an assembly unit for receiving and assembling various pieces of information into a structured format for storage or transmission. The various pieces of information may include, for example, coded or uncoded video, and coded or uncoded elements. In some implementations, the encoder 1402 includes the processor 1401 and therefore performs the operations of the processor 1401.

The transmitter 1404 receives the encoded signal(s) from the encoder 1402 and transmits the encoded signal(s) in one or more output signals. The transmitter 1404 may be, for example, adapted to transmit a program signal having one or more bitstreams representing encoded pictures and/or information related thereto. Typical transmitters perform functions such as, for example, one or more of providing error-correction coding, interleaving the data in the signal, randomizing the energy in the signal, and modulating the signal onto one or more carriers using a modulator 1406. The transmitter 1404 may include, or interface with, an antenna (not shown). Further, implementations of the transmitter 1404 may be limited to the modulator 1406.

The data transmission system 1400 is also communicatively coupled to a storage unit 1408. In one implementation, the storage unit 1408 is coupled to the encoder 1402, and stores an encoded bitstream from the encoder 1402. In another implementation, the storage unit 1408 is coupled to the transmitter 1404, and stores a bitstream from the transmitter 1404. The bitstream from the transmitter 1404 may include, for example, one or more encoded bitstreams that have been further processed by the transmitter 1404. The storage unit 1408 is, in different implementations, one or more of a standard DVD, a Blu-Ray disc, a hard drive, or some other storage device.

Referring to FIG. 15, a data receiving system 1500 is shown to which the features and principles described above may be applied. The data receiving system 1500 may be configured to receive signals over a variety of media, such as storage device, satellite, cable, telephone-line, or terrestrial broadcast. The signals may be received over the Internet or some other network.

The data receiving system 1500 may be, for example, a cell-phone, a computer, a set-top box, a television, or other device that receives encoded video and provides, for example, decoded video signal for display (display to a user, for example), for processing, or for storage. Thus, the data receiving system 1500 may provide its output to, for example, a screen of a television, a computer monitor, a computer (for storage, processing, or display), or some other storage, processing, or display device.

The data receiving system 1500 is capable of receiving and processing data information. The data receiving system or apparatus 1500 includes a receiver 1502 for receiving an encoded signal, such as, for example, the signals described in the implementations of this application. The receiver 1502 may receive, for example, a signal providing a bitstream, or a signal output from the data transmission system 1400 of FIG. 14.

The receiver 1502 may be, for example, adapted to receive a program signal having a plurality of bitstreams representing encoded pictures. Typical receivers perform functions such as, for example, one or more of receiving a modulated and encoded data signal, demodulating the data signal from one or more carriers using a demodulator 1504, de-randomizing the energy in the signal, de-interleaving the data in the signal, and error-correction decoding the signal. The receiver 1502 may include, or interface with, an antenna (not shown). Implementations of the receiver 1502 may be limited to the demodulator 1504.

The data receiving system 1500 includes a decoder 1506. The receiver 1502 provides a received signal to the decoder 1506. The signal provided to the decoder 1506 by the receiver 1502 may include one or more encoded bitstreams. The decoder 1506 outputs a decoded signal, such as, for example, decoded video signals including video information.

The data receiving system or apparatus 1500 is also communicatively coupled to a storage unit 1507. In one implementation, the storage unit 1507 is coupled to the receiver 1502, and the receiver 1502 accesses a bitstream from the storage unit 1507. In another implementation, the storage unit 1507 is coupled to the decoder 1506, and the decoder 1506 accesses a bitstream from the storage unit 1507. The bitstream accessed from the storage unit 1507 includes, in different implementations, one or more encoded bitstreams. The storage unit 1507 is, in different implementations, one or more of a standard DVD, a Blu-Ray disc, a hard drive, or some other storage device.

The output data from the decoder 1506 is provided, in one implementation, to a processor 1508. The processor 1508 is, in one implementation, a processor configured for performing post-processing. In some implementations, the decoder 1506 includes the processor 1508 and therefore performs the operations of the processor 1508. In other implementations, the processor 1508 is part of a downstream device such as, for example, a set-top box or a television.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method for video encoding, comprising:

   accessing a first set of samples and a second set of samples of a base layer picture, which respectively belong to a first octant and a second octant in a color space for the base layer picture;
   generating color mapping parameters for the first octant responsive to the first and second sets of samples;
   transforming a block of samples of the base layer picture to form a prediction block of a corresponding block in an enhancement layer (EL) picture, the block of samples of the base layer picture including at least one sample which belongs to the first octant, wherein the at least one sample which belongs to the first octant is transformed based on the generated color mapping parameters;
   encoding the corresponding block in the enhancement layer picture using the formed prediction block; and
   generating a bitstream responsive to the encoding.

2. The method of claim 1, further comprising:

   generating another set of color mapping parameters for the second octant,
   wherein the block of samples of the base layer picture further includes at least one sample which belongs to the second octant, and
   wherein the at least one sample which belongs to the second octant is transformed based on the generated another set of color mapping parameters to further form the prediction block of the corresponding block in the enhancement layer picture.

3. The method of claim 2, wherein the generating another set of parameters is responsive to the first and second sets of samples.

4. The method of claim 1 or claim 2, wherein a color space for the enhancement layer picture is different from the color space for the base layer picture.

**5.** The method of claim 1, further comprising:

selecting, in the color space for the base layer picture, a subset of octants from neighboring octants of the first octant, the subset of octants including the second octant, wherein the generating parameters is responsive to the selected subset of octants.

**6.** The method of claim 5, wherein the subset of octants correspond to one or more octant neighboring the first octant in a direction in the color space.

**7.** The method of claim 6, wherein the direction is a Y-direction, a U-direction, or a V-direction.

**8.** The method of claim 1, further comprising:

determining one or more pairs of samples, wherein a first sample of each of the one or more pairs of samples is determined to be in the first octant and a second sample of each of the one or more pairs of samples is determined to be in the second octant, and wherein the first sample and the second sample of each of the one or more pairs of samples are disposed in spatially adjacent regions of the base layer picture.

**9.** The method of claim 8, further comprising:

determining the number of pairs in the one or more pairs of samples; and
determining that the generating parameters are responsive to the first and second sets of samples responsive to the number of pairs.

**10.** The method of claim 8, further comprising:

determining a respective difference between an EL prediction for the first sample and an EL prediction for the second sample of each of the one or more pairs of samples;
determining an error responsive to the determined respective differences; and
determining that the generating parameters are responsive to the first and second sets of samples responsive to the error.

**11.** The method of claim 8, further comprising:

determining an overlapping area for the first octant, wherein a size of the overlapping area is responsive to at least one of a brightness and a perceptual importance of at least one of the first and second octants.

**12.** An apparatus for video encoding, comprising:

a communication interface configured to access a first set of samples and a second set of samples of a base layer picture, which respectively belong to a first octant and a second octant in a color space for the base layer picture;
a processor configured to
generate color mapping parameters for the first octant responsive to the first and second sets of samples, and transform a block of samples of the base layer picture to form a prediction block of a corresponding block in an enhancement layer (EL) picture, the block of samples of the base layer picture including at least one sample which belongs to the first octant, wherein the at least one sample which belongs to the first octant is transformed based on the generated color mapping parameters; and
an encoder configured to
encode the corresponding block in the enhancement layer picture using the formed prediction block, and generate a bitstream responsive to the encoding.

**13.** An apparatus for video encoding, comprising a processor configured to perform the method according to any of claims 1-11.

**14.** A non-transitory computer readable storage medium having stored thereon instructions for video encoding, according to any of claims 1-11.

**15.** A non-transitory computer readable storage medium having stored thereon a bitstream generated according to any of claims 1-11.

**FIG. 1**

**FIG. 2**

FIG. 3

FIG. 5A

FIG. 5B

FIG. 5C

FIG. 5D

400 →

405 — ( Start )

410 — access the input video

420 — begin loop n=1:number of pictures in the video

430 — Encode the base layer for the current picture (n)

440 — begin loop i=1:number of octants in picture n

450 — Compute CMF parameters for the current octant (Oct$_i$)

460 — end loop i

470 — Perform CGS prediction based on CMF parameters

480 — Encode the enhancement layer for picture n

490 — end loop n

499 — ( END )

FIG. 4

FIG. 6A

FIG. 6B

FIG. 7A

FIG. 7B

FIG. 7C

FIG. 7D

800 ↘

805 ⎯ ( Start )

810 ⎯ | Initialization |

820 ⎯ | Compute CMF parameters $P_1$ without overlapping |

830 ⎯ | Compute discontinuity errors ($E_{1,j}$, j=1:# of boundaries to check) in EL prediction based on $P_1$ for individual boundaries |

840 ⎯ | Compute CMF parameters $P_2$ with overlapping in all boundaries to check |

850 ⎯ | Compute discontinuity error ($E_{2,j}$) in EL prediction based on $P_2$ for boundary j |

860 ⎯ | Determine overlapping or not for boundary j based on $E_{1,j}$ and $E_{2,j}$ |

870 ⎯ < More boundaries to check? >     yes

no

880 ⎯ | Computes the CMF parameters for the octant based on the determined overlapping area |

899 ⎯ ( END )

**FIG. 8**

FIG. 9A

FIG. 9B

FIG. 9C

$E_{1,L} > E_{2,L}$   $E_{1,R} < E_{2,R}$

FIG. 9D

current octant Oct

Boundary area

super octant Oct'

FIG. 10

1100

1105 — Start

1110 — Initialization

1120 — Begin loop on sample $S_i$

1130 — Determine octant $Oct_K$ the sample $S_i$ falls into

1140 — Begin loop on sample $S_j$ (spatial neighbor of $S_i$)

1150 — Determine octant $Oct_L$ the sample $S_i$ falls into

1160 — $Oct_K$ and $Oct_L$ are different and share boundary $B_{KL}$, $S_i$ and $S_j$ fall into boundary area? — no

yes

1170 — Compute the discontinuity error $E_{ij} = |Y'_i - Y'_j|$

1180 — Sum_E($B_{KL}$) += $E_{ij}$; N($B_{KL}$) ++

1181 — More neighbors to $S_i$? — yes

no

1182 — More samples in the image?

1190 — Determine overlapping for each octant and compute the CMF parameters for the octants

1199 — END

**FIG. 11**

**1190**

**1210** — Begin loop on octant boundaries

**1220** — Discontinuity test condition

yes            no

**1230** — Mark boundary as "overlap"

**1240** — Mark boundary as "no overlap"

**1250** — More octant boundaries     yes

no

**1260** — Compute the CMF parameters for the octants based on the determined overlapping area

**FIG. 12**

FIG. 13

<u>1400</u>

1408

Storage

1401

Processor

1402

Encoder

1404

Transmitter

Modulator

1406

Output
signal

data transmission system

FIG. 14

<u>1500</u>

1502

Input
signal

Receiver

Demodulator

1504

1506

Decoder

Output
video

1508

Processor

data receiving system

Storage

1507

FIG. 15

Europäisches
Patentamt

European
Patent Office

Office européen
des brevets

## EUROPEAN SEARCH REPORT

Application Number

EP 15 30 5507

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/341305 A1 (QU SHENG [US] ET AL) 20 November 2014 (2014-11-20) | 1-7,9-15 | INV. H04N19/186 |
| Y | * paragraph [0041] - paragraph [0106] * | 8 | H04N19/30 H04N19/86 |
| X | US 7 843 465 B1 (SHAICK BEN-ZION [IL]) 30 November 2010 (2010-11-30) * column 7 - column 9 * | 1-7,9-15 | H04N19/36 |
| Y | US 2009/175338 A1 (SEGALL CHRISTOPHER A [US]) 9 July 2009 (2009-07-09) * paragraphs [0041] - [0043] * | 8 | |
| A | US 2010/208810 A1 (YIN PENG [US] ET AL) 19 August 2010 (2010-08-19) * claim 3 * | 1-15 | |
| A | HE Y ET AL: "SCE1: Combined bit-depth and color gamut conversion with 3D LUT for SHVC color gamut scalability", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0186, 4 January 2014 (2014-01-04), XP030115715, * the whole document * | 1-15 | |

TECHNICAL FIELDS
SEARCHED (IPC)

H04N
G09G

The present search report has been drawn up for all claims

| Place of search | Date of completion of the search | Examiner |
|---|---|---|
| Munich | 8 September 2015 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5507

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2015

| Patent document cited in search report | | Publication date | Patent family member(s) | | Publication date |
|---|---|---|---|---|---|
| US 2014341305 | A1 | 20-11-2014 | CN | 104041036 A | 10-09-2014 |
| | | | EP | 2801192 A1 | 12-11-2014 |
| | | | JP | 2015503873 A | 02-02-2015 |
| | | | KR | 20140120320 A | 13-10-2014 |
| | | | TW | 201347542 A | 16-11-2013 |
| | | | US | 2014341305 A1 | 20-11-2014 |
| | | | WO | 2013103522 A1 | 11-07-2013 |
| US 7843465 | B1 | 30-11-2010 | US | 7843465 B1 | 30-11-2010 |
| | | | US | 8098260 B1 | 17-01-2012 |
| US 2009175338 | A1 | 09-07-2009 | JP | 2011509536 A | 24-03-2011 |
| | | | US | 2009175338 A1 | 09-07-2009 |
| | | | WO | 2009087952 A1 | 16-07-2009 |
| US 2010208810 | A1 | 19-08-2010 | BR | PI0817769 A2 | 24-03-2015 |
| | | | BR | PI0818648 A2 | 07-04-2015 |
| | | | CN | 101822055 A | 01-09-2010 |
| | | | CN | 101822059 A | 01-09-2010 |
| | | | EP | 2206349 A2 | 14-07-2010 |
| | | | EP | 2206350 A2 | 14-07-2010 |
| | | | JP | 5534521 B2 | 02-07-2014 |
| | | | JP | 5534522 B2 | 02-07-2014 |
| | | | JP | 2011501563 A | 06-01-2011 |
| | | | JP | 2011501564 A | 06-01-2011 |
| | | | KR | 20100081988 A | 15-07-2010 |
| | | | KR | 20100085106 A | 28-07-2010 |
| | | | TW | 200935913 A | 16-08-2009 |
| | | | TW | 200935914 A | 16-08-2009 |
| | | | US | 2010208809 A1 | 19-08-2010 |
| | | | US | 2010208810 A1 | 19-08-2010 |
| | | | WO | 2009051692 A2 | 23-04-2009 |
| | | | WO | 2009051694 A2 | 23-04-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- High Efficiency Video Coding, Recommendation ITU-T H.265. ITU-T, October 2014